# FASCICULE DE BREVET EUROPEEN

(11) **EP 0 734 136 B1**
(45) Date de publication et mention de la délivrance du brevet: **16.06.2004**
(21) Numéro de dépôt: 96400589.6
(22) Date de dépôt: 21.03.1996
(51) Int. Cl.: H04L 7/04, H04L 7/027

(54) **Procédé de transmission de données numériques et récepteur pour la mise en oeuvre du procédé**
Verfahren zur Übertragung digitaler Daten und Empfänger zur Durchführung des Verfahrens
Method of transmitting digital data and receiver for implementing the method

(30) Priorité: 22.03.1995 FR 9503338
(43) Date de publication de la demande: 25.09.1996
(73) Titulaire: SAGEM SA, 75783 Paris Cédex 16 (FR)
(72) Inventeur: Delaforge, Daniel, 95000 Cergy (FR); Rabeux, Pascal, 95520 Osny (FR)
(74) Mandataire: Bloch, Gérard

(56) Documents cités:
- EP-A- 0 155 762
- EP-A- 0 410 532
- GB-A- 2 276 295
- US-A- 4 520 480

## Description

La transmission de données sur une liaison entre un émetteur et un récepteur nécessite, dans certaines applications en temps réel, de pouvoir transmettre ces données le plus rapidement possible, en vue de leur exploitation du côté réception.

Plusieurs problèmes doivent être résolus pour atteindre ce but.

Tout d'abord, il faut éviter que le bruit perturbant la liaison n'empêche la reconnaissance des données reçues. Sinon, il faudrait les retransmettre. Il faut aussi utiliser le plus efficacement possible la liaison, afin de limiter le temps de transmission. Enfin, si le récepteur n'est pas disponible en permanence, l'émetteur répète en continu un même message de données et le récepteur doit pouvoir recevoir et reconnaître les données d'une fin de message pour les associer aux données de début de message transmises lors de l'émission suivante du message et ainsi éviter de devoir attendre la fin de l'émission suivante pour disposer du message.

Pour s'affranchir du bruit, ou au moins en limiter l'effet, il est connu d'effectuer une transmission asynchrone, caractère par caractère, dans laquelle chaque caractère, représenté par quelques bits, est précédé d'un bit de synchronisation appelé START, apparaissant après un temps mort de repos, et se termine par un autre bit de synchronisation, ou signalisation, STOP, indiquant le début du temps mort. Les caractères sont ainsi transmis de façon asynchrone alors que les bits d'un même caractère sont transmis de façon synchrone. Une telle transmission permet de s'affranchir du bruit, car un défaut de synchronisation dû au bruit n'affecte a priori qu'un seul caractère. Cependant, la vitesse de transmission est limitée par la présence du temps mort et des bits START et STOP qui restreignent l'efficacité de l'utilisation de la liaison.

Une transmission synchrone comporte, au contraire, un motif de synchronisation, constitué de données de synchronisation, émis en début du message. L'accroissement de la vitesse de transmission, dû à l'absence de bits de synchronisation ultérieurs, n'est qu'illusoire dès que le bruit perturbe la liaison de données, et fait perdre la synchronisation de tout le message. Or, dans le cas d'une liaison radio, le taux de bits erronés dû au bruit peut atteindre quelques pourcent.

Enfin, la reconnaissance des données d'information d'une fin de message nécessite de recevoir simultanément des données de signalisation qui permettent de "recadrer" les données dans le message tronqué, ce qui exclut a priori une transmission synchrone avec un motif de synchronisation en début du message.

La présente invention vise à résoudre au moins les deux premiers problèmes ci-dessus et à faciliter la reconnaissance d'une fin de message.

A cet effet, l'invention concerne tout d'abord un procédé de transmission de données numériques, sur une liaison de transmission reliant un émetteur et un récepteur, dans lequel un canal de transmission est partagé en un canal de données d'information et une fenêtre de données de synchronisation de g bits dans laquelle l'émetteur émet un motif de synchronisation prédéterminé mémorisé dans le récepteur et, dans le récepteur, le flux des données reçues est comparé au motif de synchronisation mémorisé pour déterminer la position de la fenêtre de données de synchronisation dans le flux reçu et en déduire la position du canal de données d'information, procédé caractérisé par les étapes,
en émission,
- d'émettre le motif de synchronisation selon un pas déterminé de p bits et,
   en réception,
- d'extraire du flux de données, des groupes de q bits successifs qu'on écrit respectivement dans une pluralité de p registres. mémoires, les groupes de q bits étant mutuellement décalés d'un bit entre eux,
- de procéder à la corrélation du contenu de chaque registre et du motif de synchronisation mémorisé après réception, sur une série de pas, de plusieurs motifs de synchronisation, et
- de sélectionner comme fenêtre de synchronisation le contenu du registre présentant la meilleure des corrélations.

Ainsi, le récepteur se cale, pour la réception des données de synchronisation, sur le groupe présentant la meilleure corrélation. Comme la probabilité d'erreur de sélection décroît à mesure que croît la largeur des groupes, on dispose en quelque sorte d'un intégrateur logique qui élimine grandement le bruit et, une fois synchronisé, le récepteur peut récupérer les bits de données d'information mémorisés pour, en particulier, reconstituer une fin de message.

On notera que EP-A-0 410 532 enseigne de suréchantillonner, en émission, un signal d'une porteuse de données de synchronisation et, en réception, d'effectuer un recalage de la phase de l'horloge de réception par corrélation entre un bloc de données (suréchantillonnées) reçues et une pluralité de blocs de données de synchronisation homologues mémorisées dans le récepteur.

En bref, il s'agit d'une synchronisation bit, par action sur la phase de l'horloge de réception, afin de compenser l'effet des distorsions de propagation, cette synchronisation intervenant dans une étape préalable de transmission, avant toute transmission de données utiles. Il n'y a donc, à un instant donné, qu'un canal ou fenêtre de synchronisation ou qu'un canal de données utiles et le problème, objet de la présente demande, de détermination de la position d'une fenêtre de synchronisation, partageant (temporellement) un canal de transmission avec un canal de données, non seulement n'est pas abordé mais ne peut pas se poser.

L'invention concerne aussi un récepteur pour la mise en oeuvre de la partie réception du procédé de l'invention, comportant des moyens de comparaison agencés pour comparer un motif de bits de synchronisation, mémorisé dans des moyens de mémorisation du récepteur, au flux de données reçues et commander en conséquence des moyens de sélection d'une fenêtre de synchronisation de q bits successifs, se répétant avec un pas de p bits, dans laquelle est transmis le motif de synchronisation, caractérisé par le fait qu'il comporte des moyens d'extraction de q bits dans des pas successifs du flux reçu agencés pour alimenter p registres selon ledit décalage mutuel d'un bit entre registres et les moyens de comparaison sont agencés pour effectuer des corrélations entre le contenu de chaque registre et le motif de synchronisation mémorisé, pour comparer les résultats des corrélations et commander en conséquence les moyens de sélection de la fenêtre de synchronisation.

L'invention sera mieux comprise à l'aide de la description suivante de la forme de réalisation préférée du récepteur pour la mise en oeuvre du procédé de l'invention, en référence au dessin annexé, sur lequel :

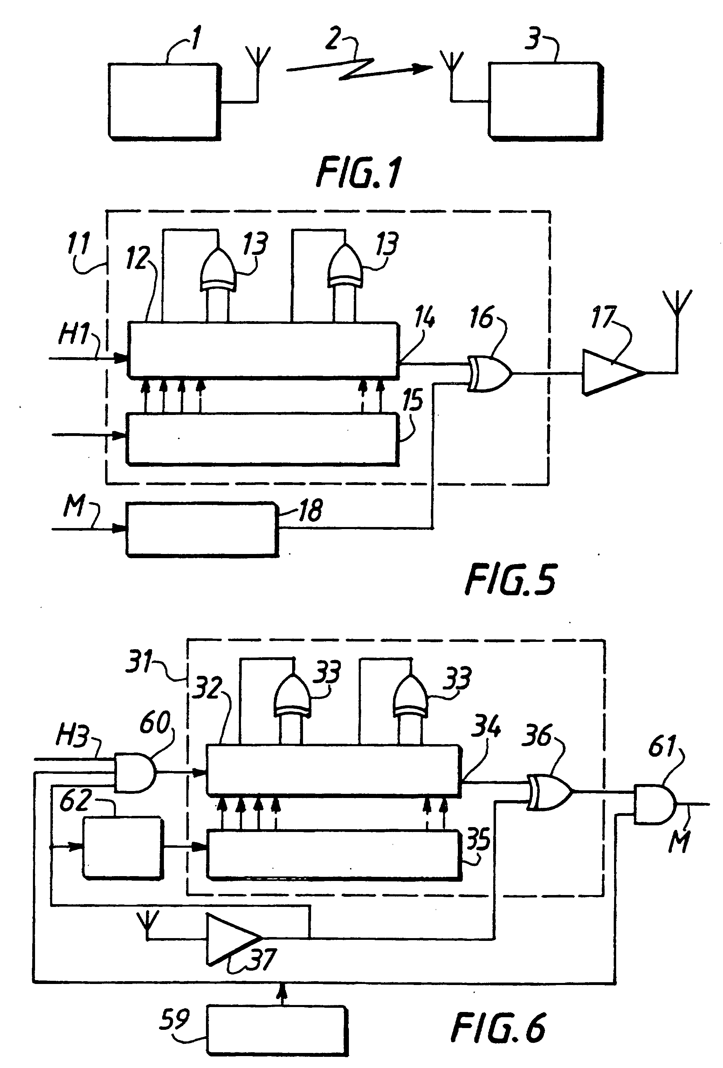

- la figure 1 est une représentation schématique d'un émetteur radio de données numériques relié au récepteur de l'invention ;
- la figure 2 illustre le protocole utilisé pour la transmission de données,
- la figure 3 illustre le procédé d'extraction de bits de la fenêtre de synchronisation,
- la figure 4 représente les circuits de synchronisation du récepteur,
- les figures 5 et 6 représentent un embrouilleur et un débrouilleur de données, respectivement de l'émetteur et du récepteur, et
- la figure 7 est un organigramme illustrant la synchronisation du débrouilleur sur l'embrouilleur.

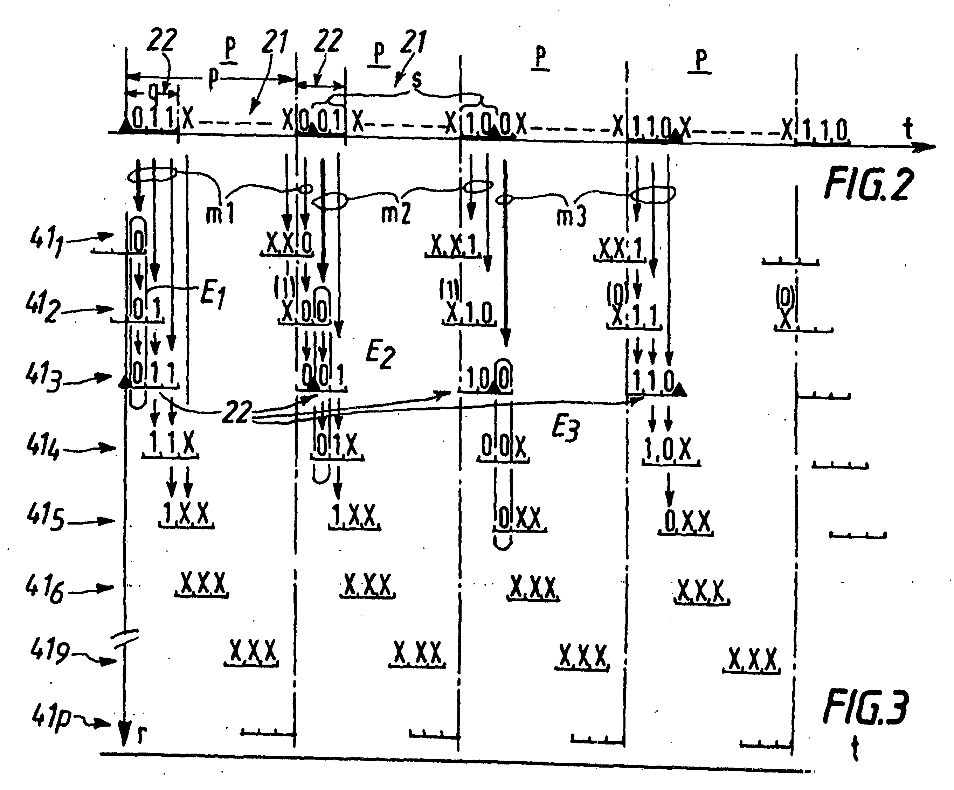

L'émetteur radio numérique 1 est relié au récepteur 3 par une liaison radio 2. Dans cet exemple, l'émetteur 1 émet des messages qui sont transmis dans un canal de transmission d'informations 21 qui utilise la liaison 2 en temps partagé avec une fenêtre de synchronisation 22. Le temps t est porté en abscisse sur les figures 2 et 3. La fenêtre de synchronisation 22 sert à transmettre des motifs de s bits de synchronisation utilisés par le récepteur 3 pour se synchroniser logiquement, c'est-à-dire pour repérer, dans le flux de bits reçus, la position de la fenêtre de synchronisation 22 afin d'en déduire la position du canal d'information 21 et d'en exploiter les bits du message.

La fenêtre de synchronisation 22, comportant q positions de bits, est ouverte cycliquement selon un pas P de p bits transmis sur la liaison 2, c'est-à-dire qu'elle est entrelacée temporellement avec le canal 21.

L'émission de bits successifs du motif de synchronisation m se répète en permanence dans les fenêtres 22 successives. Dans l'exemple de la figure 2, où q = 3 bits et s = 4 bits, le motif m nécessite deux fenêtres 22 pour sa transmission complète, les quatre fenêtres 22 représentées transmettant trois motifs, m1, m2, m3.

Pour déterminer la position de la fenêtre 22 dans le flux de données reçu, le récepteur 3 effectue ce que l'on peut appeler un échantillonnage multiple, ou glissant, des données, selon le pas P de répétition, en prélevant à chaque fois g bits dans chaque pas P, comme expliqué ci-après.

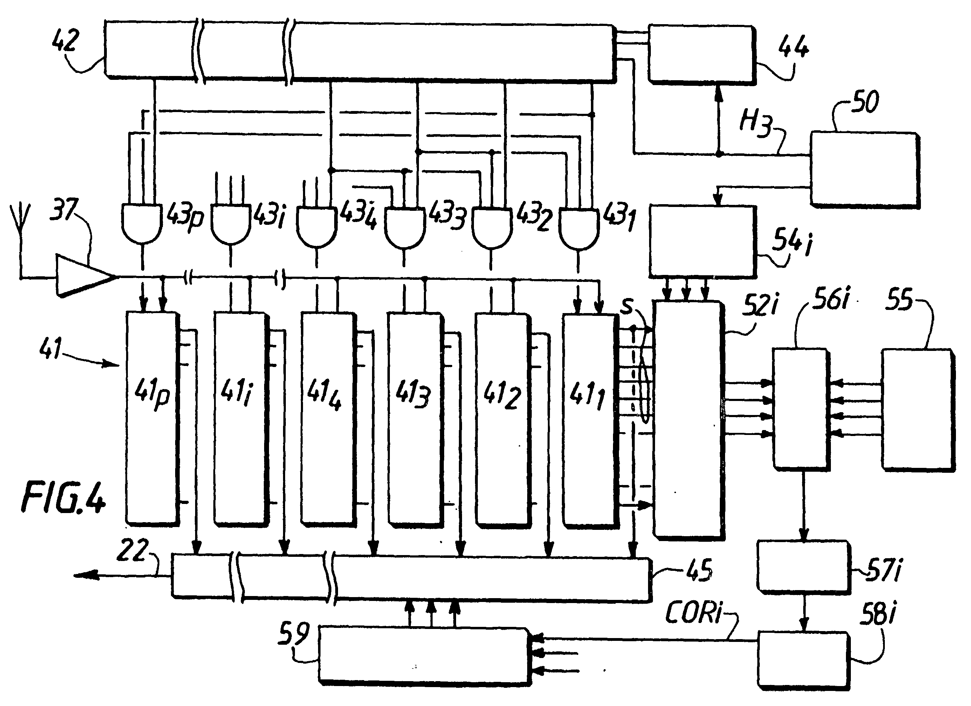

Pour cela, le récepteur 3 comporte une pluralité 41 de p registres mémoire, 41₁,...,41ᵢ,..., 41ₚ (figures 3 et 4), ici des registres à décalage à entrée série et à sorties parallèles, qui vont chacun mémoriser, sur une série de pas P successifs, les groupes de q bits qui sont mutuellement décalés d'un bit entre eux, entre registres successifs 41₁ à 41ₚ.

L'échantillonnage de l'un des registres 41, et d'un seul, à identifier, est donc, avec certitude, en phase avec la réception de la fenêtre de synchronisation 22, tandis que les autres registres 41 présentent des décalages, croissant proportionnellement à l'écart de leur rang i par rapport à celui du registre 41 en phase.

La figure 3 traduit cette situation et représente, sur une série de segments, le contenu de chacun des registres 41 en regard des bits du flux reçu par le récepteur 3 selon la figure 2. Le rang r des registres est porté en ordonnée.

Les bits du motif m, ici supposé formé de la suite de quatre bits : 0110, sont reportés dans les fenêtres 22 et sur les positions d'échantillonnage des divers registres 41. Les bits du canal d'informations 21, essentiellement variables avec le message transmis, sont représentés par la lettre X.

Dans le cas de la figure 3, c'est l'échantillonnage du registre 41₃ qui est en phase avec la réception de la fenêtre de synchronisation 22, si bien que son contenu reproduit exactement la suite des trois motifs m1-m3 représentés.

On remarque que d'autres registres 41 pourraient éventuellement présenter aussi, sur le nombre limité de quatre pas P de cet exemple, la même succession de trois motifs m. C'est le cas par exemple pour le registre 41₂, si l'on suppose que les quatre bits X, en tête de chaque échantillonnage, ont respectivement les valeurs 1, 1, 0, 0, indiquées au-dessus entre parenthèses. La probabilité correspondante est de 1/2⁴ = 1/16 en supposant une distribution aléatoire des valeurs des bits X du message dans le canal 21.

Cette probabilité d'erreur, ou d'ambiguïté, peut être réduite en dessous de tout seuil désiré par une augmentation de la taille s du motif.

Dans le même but, l'analyse du contenu des registres 41 peut porter sur un nombre accru de motifs m, c'est-à-dire que l'on effectue une mesure de la corrélation entre les contenus des registres 41 et une suite formée par duplication du motif m, de référence, qui a été mémorisé dans le récepteur 3, en fabrication ou tout au moins avant exploitation. La suite, formée de zones successives de motifs reconnus, ou éventuellement quasi reconnus comme expliqué ci-après, ou non reconnus, permet ainsi d'effectuer, par rapport à la suite de référence, une mesure de corrélation statistiquement précise.

Afin de s'affranchir encore mieux de l'influence du bruit perturbant la liaison radio 2 et induisant en particulier des bits erronés dans les motifs m reçus, il est procédé à une corrélation prenant en compte les quasi-reconnaissances du motif évoquées ci-dessus. Pour cela, il est effectué une corrélation entre le contenu de chaque registre 41, après réception sur une série de pas P de plusieurs motifs de synchronisation m, et le même motif de synchronisation m, de référence.

Ainsi, pour reprendre l'exemple de la figure 3, un taux de défaut d'un bit sur quatre, donc très élevé, et affectant, par exemple, le premier bit (0) de chaque motif m1 - m3, fausserait, pour ce qui est des registres 41₂ et 41₃, le début des motifs m1 et m2 (positions E1, E2) à la fois dans les registres 41₂ et 41₃, et le début du motif m3 uniquement dans le registre 41₃ (E3). On voit ainsi que la probabilité de choisir à tort le registre 41₂ à la place du registre 41₃ reste faible puisque les erreurs ont sensiblement affecté autant le contenu de ces deux registres. En effet, même en l'absence de bruit, le registre 41₂ présente, en moyenne, 2 bits X sur les 4 représentés qui n'ont pas la valeur voulue pour le motif m et, en plus, 2 bits du motif m erronés du fait du bruit. Le registre 41₃ ne comporte que 3 bits erronés, du fait du bruit, et présente donc une meilleure corrélation avec une suite de trois motifs m de référence.

En particulier, un avantage apporté par la mesure de la corrélation individuelle de chaque zone de registre 41, par rapport à une simple comparaison fournissant un résultat "binaire" : égalité ou non du motif m de référence avec le contenu de zones successives (m1- m3) des registres 41, réside dans le fait suivant.

En reprenant l'exemple de bruit ci-dessus, le motif m3 risque d'être reconnu dans le registre 41₂ si les 2 bits X considérés (troisième et quatrième) sont en 0, ce qui correspond à une probabilité de 1/4, tandis que le motif m ne serait reconnu, par une comparaison stricte, en aucune des trois positions m1- m3 dans le registre 41₃. Par une comparaison stricte de chaque zone, le risque de choisir à tort le registre 41₂ serait donc plus élevé.

Au contraire, avec la mesure de la corrélation pour chaque zone, on détecte les similitudes entre le contenu des registres 41 et le motif de référence m1 - m3 attendu et l'on pondère le résultat de la corrélation individuelle entre chaque zone d'un registre 41 et le motif m de référence en fonction inverse du nombre de discordances relevées dans la zone considérée, pour ensuite affecter à chaque registre 41 une note pondérée totale, de mesure de la corrélation.

Cette corrélation peut reprendre le principe de l'échantillonnage glissant exposé ci-dessus, appliqué cette fois au contenu de chaque registre 41, comme cela est expliqué ci-après, en regard de la figure 4, qui représente schématiquement la logique de synchronisation du récepteur 3.

Un circuit récepteur radio 37 alimente les registres 41 sous la commande d'un démultiplexeur 42 d'échantillonnage. Chaque bit du flux entrant est appliqué à tous les registres 41, mais seuls q = 3 registres 41, pour reprendre l'exemple de la figure 3, de rangs adjacents le prennent en compte. Chaque registre 41ᵢ est commandé, sur son entrée d'horloge, par une porte OU particulière 43ᵢ recevant les sorties de rangs i, i+1 et i+2 du démultiplexeur 42. Une base de temps 50, asservie de façon connue, en phase et fréquence, sur la fréquence des bits du flux reçu, par détection des transitions de ceux-ci, fournit un signal d'horloge H3 faisant avancer un compteur 44 à p états commandant le démultiplexeur 42. L'horloge H3 est aussi appliquée à une entrée d'inhibition du démultiplexeur 42 et, de ce fait, la sortie de chaque porte OU 43ᵢ présente, ici, q = 3 impulsions d'avance du registre 41ᵢ associé lors de trois périodes élémentaires successives de réception de bits par le circuit 37. Ainsi, le premier bit reçu par le récepteur 3 est mémorisé dans les q = 3 registres 41 de rangs respectifs i, i+1, i+2, le deuxième bit l'est dans les registres 41 de rangs i+1, i+2, i+3, etc.

Pour effectuer la mesure de la corrélation CORᵢ du contenu d'un registre 41ᵢ (i = 1), une mémoire 55 contenant le motif m attaque les entrées du comparateur 56ᵢ relié, par ses s = 4 autres entrées, aux s = 4 sorties du multiplexeur quadruple 52ᵢ d'échantillonnage relié en entrée aux sorties du registre 41ᵢ.

Le compteur 54ᵢ, commandé par la base de temps 50, fait balayer au multiplexeur 52ᵢ une suite de zones de s bits du registre 41ᵢ, en décalant d'un bit à chaque fois. Pour chaque position de zone analysée par le comparateur 56ᵢ, la base de temps 50 commande une mémorisation du nombre d'erreurs dans une mémoire 57ᵢ. En fin d'analyse du contenu du registre 41ᵢ considéré, un circuit arithmétique 58ᵢ lit la mémoire 57ᵢ et calcule la corrélation globale CORᵢ, comme cela est expliqué plus en détails ci-dessous.

Les opérations ci-dessus sont effectuées pour l'ensemble des registres 41, après réception d'environ 2000 bits dans cet exemple. De façon pratique, on comprendra que les registres 41 peuvent être une mémoire unique associée à un jeu unique 52, 54, 56-58 de circuits d'extraction de q bits et de calcul de corrélation 52ᵢ, 54ᵢ, 56ᵢ-58ᵢ.

Un circuit arithmétique 59 compare les corrélations CORᵢ des divers registres 41ᵢ et détermine la meilleure, ce qui permet de sélectionner le rang i du registre 41ᵢ présentant, de façon la plus probable, un décalage nul par rapport à la fenêtre de synchronisation 22.

De cette façon, les circuits 56, 57, 58, 59, alimentés par les circuits 52, 54 d'extraction de q bits de pas P successifs du flux reçu, mesurent des corrélations entre le contenu de chaque registre 41ᵢ et le motif de synchronisation m mémorisé dans la mémoire 55. '

Le circuit 59 applique ensuite le nombre i aux entrées d'adresse d'un multiplexeur 45 dont les entrées de données sont respectivement reliées à la première sortie de chaque registre 41ᵢ et qui sélectionne ainsi et restitue les bits de la fenêtre de synchronisation 22.

En outre, la comparaison de la meilleure corrélation CORᵢ avec son maximum théorique permet de déterminer le taux d'erreur de la liaison 2 et d'en déduire des probabilités pour qu'un message reçu dans le canal 21 soit incompréhensible ou, plus grave, soit reconnu comme ayant une signification autre que celle du message émis.

La note pondérée CORᵢ, représentant la corrélation totale relative au contenu de chaque registre 41ᵢ, peut être le simple total des notes de corrélation de chaque zone, exprimée par exemple par le nombre d'erreurs, mais elle pourrait aussi prendre en compte les positions relatives des zones de chaque registre 41 successivement analysées. En effet, deux zones se recouvrant partiellement ne peuvent pas, par principe, avoir toute deux un cadrage correct, ou absence de décalage, par rapport au motif m transmis. De ce fait, la mesure de la corrélation du contenu d'un registre 41 avec une suite de motifs m de référence, dupliqués à partir de la mémoire 55, pourrait porter simultanément sur un bloc de plusieurs zones adjacentes, pouvant même représenter tout le contenu du registre 41, zones adjacentes présentant donc, entre elles, une corrélation réaliste de positions relatives.

Des décalages, en nombre s-1, d'une position à chaque fois, des blocs analysés permettraient ensuite de sélectionner le bloc, ou la position de décalage du multiplexeur 52ᵢ, fournissant la meilleure corrélation globale pour le contenu du registre 41 considéré.

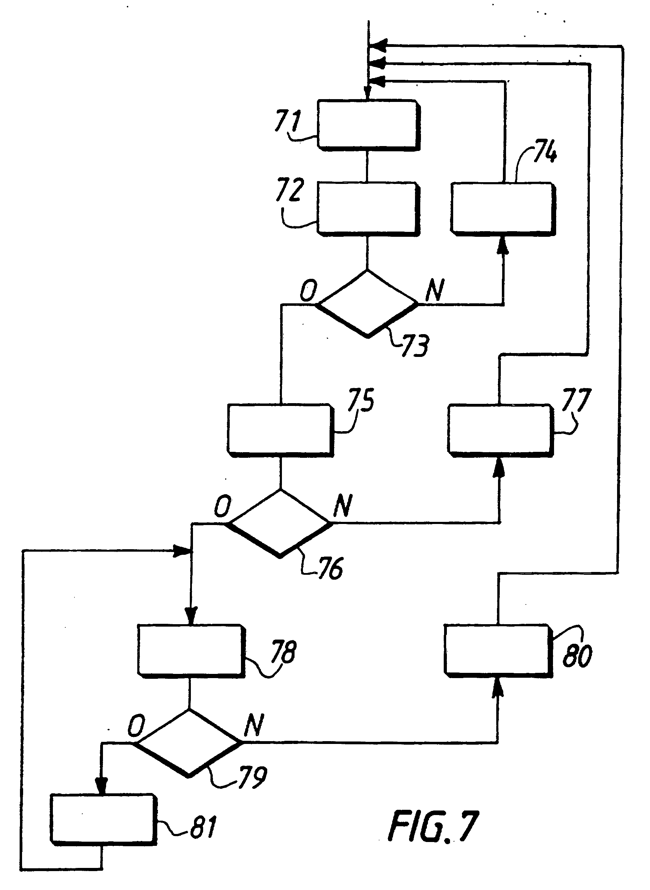

Dans le présent exemple, les messages transmis dans le canal 21 sont embrouillés à l'émission par un embrouilleur 11 de l'émetteur 1 (figure 5). L'embrouilleur 11 est constitué, de façon connue, d'un registre à décalage 12 et de portes OU exclusif 13 de rebouclage de certaines combinaisons de sorties intermédiaires du registre 12 sur des entrées intermédiaires de celui-ci. Le registre 12 part d'un état initial, auquel il peut être forcé par des entrées parallèles attaquées par un registre 15 série/parallèle de chargement d'état initial. Recevant un signal d'horloge H1, le registre 12 prend une suite déterminée d'états avant de repasser par son état initial, pour un nouveau cycle.

En fonction des rebouclages par les portes OU exclusif 13 qui déterminent une clé d'embrouillage, le registre 12 fournit, par une sortie 14, une séquence pseudo-aléatoire de bits appliqués à une porte OU exclusif 16 recevant aussi les bits du message M à transmettre, provenant d'un circuit 18. Le flux de bits émis dans le canal 21 est ainsi embrouillé et émis par un circuit radio 17.

Le récepteur 3 (figure 6) comporte un débrouilleur 31 ayant ici la même structure que l'embrouilleur 11, avec des circuits 32-36 respectivement identiques aux circuits 12-16. Le circuit récepteur radio 37 reçoit le flux de données émises et l'applique à la porte 36 fournissant un flux débrouillé de bits du message.

Le débrouilleur 31 est inhibé en entrée d'horloge H3 (porte 60) et en sortie (porte 61 restituant le canal 21) par le circuit 59 pendant les s = 3 périodes de réception des bits de la fenêtre de synchronisation 22, repérées d'après le rang i (ici i = 3) du registre 41ᵢ recevant les bits de la fenêtre 22.

Par ailleurs, les positions, dans les registres 41ᵢ autres que 41₃, des bits du canal de données 21, eux aussi en triple exemplaire, sont déterminées par le circuit 59. Il suffit par exemple, comme le montre la figure 3, de lire q = 3 bits X, reçus successivement, du registre 41₆ puis de même pour le registre 41_{6+q}, soit 41₉, etc, (avec ajustement final éventuel si p - q n'est pas un multiple de q = 3) pour reconstituer les données reçues dans le canal 21 de p - q bits par pas P, avant la synchronisation logique du récepteur 3 expliquée ci-dessus. On peut ainsi récupérer une fin de message.

On comprendra que, d'une façon générale, les bits successifs de la fenêtre de synchronisation 22 auraient pu être séparés à l'intérieur du pas P, dans la mesure où leurs positions relatives restent déterminées et que le récepteur 3 peut en faire l'échantillonnage au rythme de leurs émissions respectives. Dans un cas particulier, il peut n'y avoir qu'un seul bit (s = 1) de synchronisation par pas P.

La synchronisation du débrouilleur 31 sur l'embrouilleur 11 est effectuée en associant au motif m de synchronisation émis, dans la fenêtre 22, un nombre de recadrage des données du message émis dans le canal 21 par rapport à l'état du registre 12, ou trame de présentation des données, au moment de l'émission.

Ce nombre de recadrage, émis de façon continue dans la fenêtre 22, avec actualisation à chaque fois, indique l'état de chaque étage du registre 12 et permet au registre de débrouillage 32 de prendre ce même état, c'est-à-dire d'être et de rester synchrone par rapport à l'embrouilleur 11.

En outre, l'embrouilleur 11 disposant de plusieurs clés d'embrouillage possibles, il est aussi émis, dans le fenêtre 22, des données représentant la clé d'embrouillage utilisée, c'est-à-dire en fait la clé de débrouillage à utiliser, complémentaire de la clé d'embrouillage.

Dans cet exemple, les informations indiquant la clé de débrouillage et l'état de l'embrouilleur 11 ne sont pas émises sous forme d'une représentation directe ; il s'agit en fait, pour chaque information, d'une adresse d'une table 62 contenant un nombre déterminé d'états possibles de l'embrouilleur 11 et de clés de débrouillage.

Dans cet exemple d'embrouillage par OU exclusif, les clés d'embrouillage et de débrouillage complémentaires sont identiques, c'est-à-dire que les tables d'états et de clés de l'embrouilleur 11 sont aussi les tables d'états et de clés correspondants que le débrouilleur 31 doit adopter. Recevant ces adresses, une fois le récepteur 3 synchronisé sur les motifs m, la table 62 charge à l'état indiqué le débrouilleur 31 à travers le registre 35 et fixe sa clé de débrouillage. Les bits d'une fin de message peuvent subir le même traitement et être ainsi exploitables.

L'organigramme de la figure 7 illustre le procédé de l'invention.

A une étape 71, on mémorise environ 2 kbits dans les registres 41 et on effectue, à une étape 72, la recherche de synchronisation logique, c'est-à-dire la détermination de la position de la fenêtre de synchronisation 22. Selon le résultat des corrélations, la synchronisation, à une étape 73, est considérée comme acquise si l'application du mécanisme de corrélation permet de désigner un registre 41ᵢ comme contenant les bits de la fenêtre de synchronisation 22. Dans la négative, on poursuit, par une étape 74 d'indication d'anomalie, le remplissage des registres 41 par de nouvelles étapes 71-73. Dans l'affirmative, on recherche, à une étape 75, la synchronisation "clé" du débrouilleur 31. Si l'application du mécanisme de corrélation ne permet pas de reconnaître une clé de débrouillage, et donc que la synchronisation "clé" n'a pas été acquise, on repasse, par une étape 77 d'indication d'anomalie, à l'étape initiale 71. Sinon, à une étape 78, on recherche, comme pour la clé, la synchronisation d'état du débrouilleur 31. Dans la négative, à une étape 79, si l'application du mécanisme de corrélation ne permet pas de reconnaître un état de débrouilleur, on passe à une étape 80 d'indication d'anomalie pour revenir à l'étape initiale 71. Sinon, on passe à l'étape finale 81 de transmission des données du canal de données 21 à un circuit externe d'exploitation des données et l'on repasse à l'étape 78.

## Revendications

1. Procédé de transmission de données numériques, sur une liaison de transmission (2) reliant un émetteur (1) et un récepteur (3), dans lequel un canal de transmission est partagé en un canal de données d'information (21) et une fenêtre (22) de données de synchronisation de q bits dans laquelle l'émetteur émet un motif de synchronisation prédéterminé (m) mémorisé dans le récepteur et, dans le récepteur, le flux des données reçues est comparé au motif de synchronisation mémorisé (m) pour déterminer la position de la fenêtre de données de synchronisation (22) dans le flux reçu et en déduire la position du canal de données d'information (21), procédé **caractérisé par** les étapes,
en émission,
- d'émettre le motif de synchronisation selon un pas déterminé de p bits et,
en réception,
- d'extraire, du flux de données, des groupes de q bits successifs qu'on écrit respectivement dans une pluralité (41) de p registres mémoires, les groupes de q bits étant mutuellement décalés d'un bit entre eux,
- de procéder à la corrélation du contenu de chaque registre (41₁-41ₚ) et du motif de synchronisation mémorisé (m) après réception, sur une série de pas de plusieurs motifs de synchronisation (m), et
- de sélectionner comme fenêtre de synchronisation (22) le contenu du registre (41₁ -41ₚ) présentant la meilleure des corrélations.

2. Procédé selon la revendication 1, dans lequel la corrélation est effectuée en pondérant le résultat de la corrélation de chaque groupe de données en fonction du nombre d'erreurs qu'il présente par rapport au motif de synchronisation (m).

3. Procédé selon l'une des revendications 1 et 2, dans lequel, après synchronisation en réception, les bits de données d'information mémorisés (41) sont récupérés dans les groupes pour reconstituer une fin de message.

4. Procédé selon l'une des revendications 1 à 3, dans lequel des données de recadrage des données d'information par rapport à une trame de présentation de ces données sont associées au motif de synchronisation émis (m).

5. Procédé selon la revendication 4, dans lequel les données de recadrage comportent des données représentant l'état d'un embrouilleur (11) d'émission des données d'information.

6. Procédé selon la revendication 5, dans lequel des adresses d'une table (62) des états possibles de l'embrouilleur (11) sont incluses dans les données de recadrage.

7. Procédé selon l'une des revendications 5 et 6, dans lequel, le récepteur (3) comportant une table (62) de clés de débrouillage, complémentaires de clés d'embrouillage de l'embrouilleur (11), des adresses de ladite table (62) de clés de débrouillage sont incluses dans les données de recadrage.

8. Récepteur de données pour la mise en oeuvre de la partie réception du procédé de la revendication 1, comportant des moyens de comparaison (52, 54, 56-59) agencés pour comparer un motif (m) de bits de synchronisation, mémorisé dans des moyens de mémorisation (55) du récepteur, au flux de données reçues et commander en conséquence des moyens de sélection (45) d'une fenêtre de synchronisation (22) de q bits successifs, se répétant avec un pas de p bits, dans laquelle est transmis le motif de synchronisation (m), **caractérisé par le fait qu'**il comporte des moyens (42-44) d'extraction de q bits dans des pas successifs du flux reçu agencés pour alimenter p registres (41) selon le décalage mutuel d'un bit entre registres et les moyens de comparaison (52,54, 56-59) sont agencés pour effectuer des corrélations (CORᵢ) entre le contenu de chaque registre (41) et le motif (m) de synchronisation mémorisé (55), pour comparer les résultats des corrélations et commander en conséquence les moyens (45) de sélection de la fenêtre de synchronisation (22).

9. Récepteur selon la revendication 8, dans lequel les moyens (42-44) d'extraction des q bits sont uniques et agencés pour fonctionner en partage de temps entre les différents registres (41).

## Claims

1. Process for transmission of digital data on a transmission link (2) connecting a transmitter (1) and a receiver (3), wherein a transmission channel is divided into an information data channel (21) and a window (22) of synchronisation data of g bits in which the transmitter transmits a predetermined synchronisation pattern (m) stored in the receiver and, in the receiver, the stream of received data is compared with the stored synchronisation pattern (m) in order to determine the position of the synchronisation data window (22) in the stream received and to deduce therefrom the position of the information data channel (21), the process being **characterised by** the steps of,
during transmission,
- transmitting the synchronisation pattern in a specific step of p bits and,
during reception,
- extracting, from the data stream, groups of q successive bits which are written respectively into a plurality (41) of p memory registers, the groups of q bits being mutually offset by one bit between them,
- proceeding with the correlation of the content of each register (41₁-41ₚ) and of the stored synchronisation pattern (m) after reception over a series of steps of a plurality of synchronisation patterns (m), and
- selecting as a synchronisation window (22) the content of the register (41₁-41p) having the best correlations.

2. Process as claimed in claim 1, wherein the correlation is effected by weighting the result of the correlation of each group of data according to the number of errors which it has with respect to the synchronisation pattern (m).

3. Process as claimed in any one of claims 1 and 2, wherein after synchronisation during reception the stored information data bits (41) are retrieved in the groups in order to reconstitute a message end.

4. Process as claimed in any one of claims 1 to 3, wherein data for cropping the information data with respect to a presentation frame for these data are associated with the transmitted synchronisation pattern (m).

5. Process as claimed in claim 4, wherein the cropping data include data representing the state of a scrambler (11) for transmission of the information data.

6. Process as claimed in claim 5, wherein addresses of a table (62) of possible states of the scrambler (11) are included in the cropping data.

7. Process as claimed in any one of claims 5 and 6, wherein since the receiver (3) has a table (62) of descrambling keys which are complementary to scrambling keys of the scrambler (11), addresses of the said table (62) of descrambling keys are included in the cropping data.

8. Data receiver for implementation of the reception part of the process of claim 1, including comparison means (52, 54, 56-59) arranged to compare a pattern (m) of synchronisation bits, which is stored in memory means (55) of the receiver, with the stream of received data and as a result of this to control selection means (45) of a synchronisation window (22) of q successive bits, being repeated with a step of p bits, wherein the synchronisation pattern (m) is transmitted, **characterised in that** it has means (42-44) for extraction of q bits in successive steps of the stream received, which are arranged to supply p registers (41) according to the mutual offsetting of one bit between registers and the comparison means (52, 54, 56-59) are arranged to effect correlations (CORᵢ) between the content of each register (41) and the synchronisation pattern (m) stored (55), in order to compare the results of the correlations and as a result of this to control the means (45) for selection of the synchronisation window (22).

9. Receiver as claimed in claim 8, wherein the means (42-44) for extracting the q bits are unique and arranged to operate in a time-shared matter between the different registers (41).

## Patentansprüche

1. Verfahren zur Übertragung digitaler Daten über eine Übertragungsverbindung (2), die einen Sender (1) und einen Empfänger (3) miteinander verbindet, wobei ein Übertragungskanal in einen Informationsdatenkanal (21) und einen Synchronisationsdatenrahmen (22) mit q Bits aufgeteilt ist, in dem der Sender ein vorbestimmtes, im Empfänger gespeichertes Synchronisationsmuster (m) sendet, und im Empfänger der empfangene Datenstrom mit dem gespeicherten Synchronisationsmuster (m) verglichen wird, um die Position des Synchronisationsdatenrahmens (22) im empfangenen Datenstrom zu bestimmen und daraus die Position des Informationsdatenkanals (21) herzuleiten, wobei das Verfahren **gekennzeichnet ist durch** folgende Schritte beim Senden:
- Senden des Synchronisationsmusters mit einer vorbestimmten Schrittweite von p Bits
und
beim Empfang:
- Extrahieren der Gruppen von q aufeinanderfolgenden Bits, die jeweils in eine Vielzahl (41) von p Speicherregistern geschrieben werden, aus dem Datenstrom, wobei die Gruppen von q Bits gegenseitig um ein Bit zueinander versetzt sind,
- Vornehmen der Korrelation des Inhaltes jedes Registers (41₁-41ₚ) und des gespeicherten Synchronisationsmusters (m) nach dem Empfang auf einer Reihe von Schrittweiten mehrerer Synchronisationsmuster (m), und
- Auswählen des Inhaltes des Registers (41₁-41ₚ), das die beste der Korrelationen aufweist, als Synchronisationsrahmen (22).

2. Verfahren nach Anspruch 1, bei dem die Korrelation durch Gewichten des Korrelationsergebnisses jeder Datengruppe abhängig von der Anzahl von Fehlern durchgeführt wird, die dieses gegenüber dem Synchronisationsmuster (m) aufweist.

3. Verfahren nach einem der Ansprüche 1 und 2, bei dem nach der Synchronisation beim Empfang die gespeicherten Informationsdatenbits (41) in den Gruppen zurückgewonnen werden, um ein Nachrichtenende wiederherzustellen.

4. Verfahren nach einem der Ansprüche 1 bis 3, bei dem Rückgewinnungsdaten für die Informationsdaten in bezug auf einen Darstellungsrahmen dieser Daten dem gesendeten Synchronisationsmuster (m) zugeordnet werden.

5. Verfahren nach Anspruch 4, bei dem die Rückgewinnungsdaten Daten umfassen, die den Zustand eines Verwürflers (11) zum Senden der Informationsdaten darstellen.

6. Verfahren nach Anspruch 5, bei dem Adressen einer Tabelle (62) der möglichen Zustände des Verwürflers (11) in den Rückgewinnungsdaten enthalten sind.

7. Verfahren nach einem der Ansprüche 5 und 6, bei dem, da der Empfänger (3) eine Tabelle (62) von zu Verwürflungscodes des Verwürflers (11) komplementären Entwürflungscodes aufweist, Adressen aus der Tabelle (62) von Entwürflungscodes in den Rückgewinnungsdaten enthalten sind.

8. Datenempfänger zur Durchführung des Empfangsteils des Verfahrens nach Anspruch 1, mit Vergleichseinrichtungen (52, 54, 56-59), die dazu eingerichtet sind, ein Synchronisationsbit-Muster (m), das in Speichereinrichtungen (55) des Empfängers gespeichert ist, mit dem empfangenen Datenstrom zu vergleichen und infolgedessen Einrichtungen (45) zur Auswahl eines Synchronisationsrahmens (22) von q aufeinanderfolgenden Bits zu steuern, das sich mit einer Schrittweite von p Bits wiederholt und in dem das Synchronisationsmuster (m) übertragen wird, **dadurch gekennzeichnet, dass** der Datenempfänger Einrichtungen (42-44) zur Extraktion von q Bits aus dem empfangenen Datenstrom in aufeinanderfolgenden Schritten umfasst, die dazu eingerichtet sind, p Register (41) entsprechend dem gegenseitigen Versatz eines Bits zwischen Registern zu speisen, und dass die Vergleichseinrichtungen (52, 54, 56-59) dazu eingerichtet sind, Korrelationen (CORᵢ) zwischen dem Inhalt jedes Registers (41) und dem gespeicherten (55) Synchronisationsmuster (m) durchzuführen, um die Ergebnisse der Korrelationen zu vergleichen und infolgedessen die Einrichtungen (45) zur Auswahl des Synchronisationsrahmens (22) zu steuern.

9. Empfänger nach Anspruch 8, bei dem die Einrichtungen (42-44) zur Extraktion der q Bits einmalig und dazu eingerichtet sind, im Multiplexbetrieb zwischen den verschiedenen Registern (41) zu arbeiten.
